# EUROPÄISCHE PATENTSCHRIFT

(11) **EP 4 179 864 B1**
(45) Veröffentlichungstag und Bekanntmachung des Hinweises auf die Patenterteilung: **02.12.2026**
(21) Anmeldenummer: 22206372.9
(22) Anmeldetag: 09.11.2022
(51) Int. Cl.: A01D 34/66, A01D 34/71, A01D 34/81, A01D 34/86

(54) **SCHEIBEN-MÄHKOPF SOWIE VERFAHREN ZUM ABMÄHEN VON BEWUCHS**
DISC MOWER HEAD AND METHOD FOR CUTTING OFF FOULING
TÊTE FAUCHEUSE À DISQUES ET PROCÉDÉ DE TONTE DE SALISSURES

(30) Priorität: 12.11.2021 DE 102021129539; 12.11.2021 DE 202021106205 U
(43) Veröffentlichungstag der Anmeldung: 17.05.2023
(73) Patentinhaber: MULAG FAHRZEUGWERK Heinz Wössner GmbH & CO. KG, 77728 Oppenau (DE)
(72) Erfinder: BITSCH, Markus, 77740 Bad Peterstal-Griesbach (DE); WEIß, Lukas, 77866 Rheinau (DE)
(74) Vertreter: Weickmann & Weickmann PartmbB

(56) Entgegenhaltungen:
- JP-A- 2001 231 330
- US-A- 4 364 221
- US-A1- 2021 029 876

## Beschreibung

### I. Anwendungsgebiet

Die Erfindung betrifft einen Scheiben-Mähkopf, bei dem ein oder mehrere Schneidmesser um eine aufrechte Achse in einer meist horizontalen Ebene rotieren können und bei mehreren in der gleichen Ebene rotierenden Schneidmessern diese häufig an einer rotierend angetriebenen Tragscheibe befestigt sind weshalb vorliegend solche Mähköpfe Scheiben-Mähköpfe genannt werden, selbst wenn keine Tragscheibe vorhanden ist und das wenigstens eine Schneidmesser direkt an einer Messerwelle befestigt ist.

Ein solcher Scheiben-Mähkopf kann beispielsweise als Pfosten-Freimäher an einem dann meist größeren Walzen-Mähkopf - bei dem eine Messerwelle um eine liegende Messerachse rotiert - beweglich und über dessen Mäh-Spur seitlich vorstehend befestigt sein, um z.B. durch federnde Anlage um dort auftauchende Hindernisse wie einen Pfosten sehr exakt herumgeführt zu werden.

### II. Technischer Hintergrund

Ein solcher Pfosten-Freimäher in der Bauform als Scheiben-Mähkopf ist prinzipiell aus der Patentanmeldung DE 101 22 407 A1 bekannt.

Da bei den meisten Scheiben-Mähköpfen das Mähgut nicht nach hinten oder oben aus dem haubenartigen Gehäuse abgesaugt wird, sondern aus dem Gehäuse nach unten herabfallen und auf dem Untergrund als Mulch liegen gelassen werden soll, besteht das Problem, dass das feuchte Mähgut an der Innenseite des Gehäuses anhaftet, primär an den Innenflächen der Umfangswand, gegen die es aufgrund der Fliehkraft relativ stark angepresst wird.

Dies behindert beim Vorwärtsfahren des Scheiben-Mähkopfes das Hineinbewegen des Bewuchses in das Gehäuse und den Wirkbereich des Messers ohne Flachdrücken des Mähgutes, was zu einem unsauberen, da unterschiedlich hohen, Schnitt und damit Mähbild führt.

Wenn das im Gehäuse komprimierte Mähgut dann doch in größeren Zeitabständen herabfällt, handelt es sich um große, zusammengepresste Stücke, die nicht auf dem gemähten Untergrund liegend erwünscht sind, da zum Zwecke des Mulchens eine kleinteilige Verteilung auf der abgemähten Fläche gewünscht wird.

Zusätzlich besteht das Problem, dass durch die mit hoher Drehzahl rotierenden und zur Messerebene meist schräg angestellten Messer eine starke Luftströmung im Gehäuse bewirkt wird, was ebenfalls das heftige Anschlagen von Mähgut an der Gehäusewand bewirkt.

Die US 2021/029 876 A1 zeigt einen Scheiben-Mähkopf nach dem Oberbegriff von Anspruch 1. Auch die US 436422 A1 zeigt einen solchen Scheiben-Mähkopf.

Die JP 2001 231 330 A zeigt, dass an den Innenflächen eines Mähkopf-Gehäuses anhaftendes komprimiertes Mähgut von dort mechanisch abgelöst wird und das abgelöste komprimierte Mähgut im Gehäuse automatisch ständig zerkleinert wird.

### III. Darstellung der Erfindung

### a) Technische Aufgabe

Es ist daher die Aufgabe gemäß der Erfindung, ein Mäh-Verfahren sowie einen Scheiben-Mähkopf zur Verfügung zu stellen, der dieses Problem minimiert.

### b) Lösung der Aufgabe

Diese Aufgabe wird durch die Merkmale der Ansprüche 1 und 12 gelöst. Vorteilhafte Ausführungsformen ergeben sich aus den Unteransprüchen.

Bei einem Scheiben-Mähkopf rotiert ein Schneidmesser um eine aufrechte Achse in einer dementsprechend etwa horizontalen Ebene in dem Hauben-artigen unten offenen Gehäuse oder knapp darunter. Bei mehreren Schneidmessern können diese auch übereinander in unterschiedlichen Ebenen rotieren.

Selbst wenn das abgetrennte Mähgut durch das Gehäuse nach außen abgeführt wird - was häufig nicht der Fall ist - soll gemäß dem Grundgedanken der vorliegenden Erfindung das Anhaften von abgetrenntem Mähgut an den Innenflächen des Gehäuses, insbesondere den Innenflächen der Umfangswand, möglichst vermieden werden, da dies die ansonsten im unteren Bereich flexible Umfangswand versteift, somit das Eintreten des Bewuchses in den Wirkbereich des Schneidmessers erschwert und den Bewuchs niederdrückt und dadurch ein ungleichmäßiges, nicht erwünschtes Mähbild ergibt.

Dies gilt vor allem, wenn das abgetrennte Mähgut nicht nach oben aus dem Gehäuse abgeführt wird, sondern als kleinteiliger MUlch auf den Untergrund fallen soll, da an der Innenwand sich ansammelndes komprimiertes Mähgut sich später meist in großen Stücken löst und auf den Untergrund herabfällt.

Dies gilt erst recht, falls die Unterseite des Gehäuses ganz oder teilweise durch einen Boden geschlossen ist.

Hinsichtlich des Verfahrens wird diese Aufgabe dadurch gelöst, dass automatisch und ständig das sich an den Innenflächen des Gehäuses, insbesondere an der Innenfläche von dessen Umfangswand, anhaftende, abgetrennte komprimierte Mähgut ständig abgelöst, insbesondere mechanisch abgelöst, und das abgelöste komprimierte Mähgut automatisch ständig zerkleinert wird.

Letzteres ist vor allem dann wichtig, wenn dieses abgelöste komprimierte Mähgut nicht aus dem Gehäuse nach oben abgeführt wird, sondern auf den Untergrundzurück fallen soll als kleinteiliger Mulch.

Deshalb wird das abgelöste komprimierte Mähgut im Gehäuse mit Hilfe des gleichen Antriebes zerkleinert, der auch das Schneidmesser antreibt.

Das Ablösen des komprimierten Mähgutes von der Umfangswand geschieht mittels einer Relativbewegung in Umfangsrichtung, insbesondere einer rotierenden Relativbewegung, der Umfangswand des Gehäuses zum feststehenden Rest des Gehäuses, dem Gehäuse-Oberteil welches aus diesem Grund zweiteilig ausgebildet ist, durch einen Abstreifer am feststehenden Rest.

Die Relativbewegung kann durch Abrollen der Umfangswand an einem Hindernis bewirkt werden, während das Gehäuse-Oberteil diese Abroll-Bewegung nicht mitmacht, sondern in Drehrichtung stillsteht.

Die Relativbewegung kann auch auf andere Art und Weise bewirkt werden, beispielsweise durch den Antrieb des Schneidmessers bewirkt werden, wobei die Umfangswand relativ zum Gehäuse-Oberteil bei weitem nicht so schnell rotieren muss und auch nicht rotieren sollte wie das Schneidmesser relativ zum Gehäuse-Oberteil, sodass in diesem Fall die Umfangswand mit einer stark, vorzugsweise mindestens um den Faktor 10, besser um den Faktor 20, untersetzten Drehzahl vom Schneidmesser-Antrieb aus angetrieben werden könnte.

Zum Befestigen der Umfangswand an dem Innenring wird vorzugsweise das endliche äußere Randelement mit daran gehaltener äußerer und innerer Wand-Lage am Außenumfang des Innenringes angelegt, dann um diesen herumgebogen und an dem Außenumfang fixiert, was vorzugsweise durch Verspannen der beiden Enden des biegsamen, zugfesten äußeren Randelementes gegeneinander erfolgt.

Biegsam ist das Randelement vorzugsweise um eine quer zu seiner Erstreckungsrichtung liegende Achse, wobei es so montiert wird, dass diese Biegeachse parallel zur Rotationsachse der Schneidmesser verläuft.

Vorzugsweise enthält das Randelement ein Stahlband oder Stahlseile, wobei die Breite des bandförmigen Randelementes im montierten Zustand aufrecht steht und dessen Dicke in radialer Richtung liegt.

**In** einer konkreten Vorgehensweise wird auf die auf einer Seite des äußeren biegsamen Randelements vorstehenden Radialbolzen zunächst die äußere Wand-Lage und dann die innere Wand-Lage, die jeweils entsprechende Durchgangsöffnung aufweisen, aufgesteckt.

Anschließend erfolgt eine Vorfixierung, indem ein etwa in der Mitte der Länge des Randelementes vorhandener als Gewindebolzen ausgebildeter Bolzen, der also ein Außengewinde besitzt, gegenüber dem Innenrings fixiert, insbesondere durch diesen hindurchgesteckt und vorzugsweise von innen her gegenüber diesem verschraubt wird oder auch von außen in eine Gewindebohrung des Innenrings eingeschraubt wird.

Die beiden Enden des Randelementes werden mittels einer Spannvorrichtung anschließend in Umfangsrichtung gegeneinander verspannt und damit das Landelement gegen den Außenumfang des Innenringes angepresst. Zu diesem Zweck ist an jedem Ende des Randelementes je ein in der Aufsicht L-förmiger Endwinkel als Spannelement vorhanden, die beide in Umfangsrichtung gegeneinander Mittels einer Spannschraube verschraubt werden können.

Hinsichtlich des Scheiben-Mähkopfes - der auch als Zusatz-Scheiben-Mähkopf an einem Walzen-Mähkopf mit einer etwa horizontal liegenden Messer-Welle vorgesehen sein kann - wird diese Aufgabe dadurch gelöst, dass innerhalb der Umfangswand des Gehäuses ein Abstreifer nahe an der Umfangswand angeordnet ist und die Innenseite der Umfangswand, meist die gesamte Umfangswand, relativ zum Abstreifer in Umfangsrichtung beweglich ist.

Dadurch schabt der Abstreifer an der Innenseite der Umfangswand anhaftendes Mähgut während der Relativbewegung ab.

Insbesondere ist zu diesem Zweck entweder die Innenseite der Umfangswand oder der Abstreifer um die Rotationsachse der Umfangswand drehbar.

Vorzugsweise ist die Umfangswand des haubenartigen, unten wenigstens teilweise offenen Gehäuses drehbar gegenüber einem feststehenden, nicht rotierenden, Gehäuse-Oberteil und an der Unterseite des Gehäuse-Oberteils innerhalb der Umfangswand der Abstreifer angeordnet, der einen bis nahe an die Innenseite der Umfangswand heranreichenden und vom Gehäuse-Oberteil nach unten ragenden Abstreif-Schenkel aufweist.

Durch die Relativbewegung zwischen Gehäuse-Oberteil und Umfangswand schabt der Abstreifer, insbesondere mit seinem nach unten abragenden, also aufrecht stehenden, Abstreif-Schenkel, das an der Innenfläche der Umfangswand angehaftete Mähgut ab.

Die Relativbewegung wird in der Regel dadurch bewirkt, dass der Scheiben-Mähkopf zum Abmähen von Bewuchs nahe bis an ein Hindernis heran, wie etwa einen Baum oder ein Verkehrsschild, benutzt wird, und hierfür ein Teil des Gehäuses des Scheiben-Mähkopfes, zum Beispiel mit dem Außenumfang seiner Umfangswand an diesem Hindernis während des Entlangfahrens oder Herumfahrens abrollt und hierdurch die Relativbewegung zwischen Umfangswand und Gehäuse-Oberteil erzielt wird.

Alternativ kann die Relativ-Bewegung vom Antrieb des Schneidmessers aus bewirkt werden, wobei die Umfangswand relativ zum Gehäuse-Oberteil über ein Zerkleinerungs-Getriebe mit einer stark untersetzten Drehzahl vom Schneidmesser-Antrieb aus angetrieben werden kann.

Zusätzlich zu dem Abstreifer sollte ein Räummesser vorhanden sein, welches vorzugsweise rotierend im Gehäuse angeordnet ist und vorzugsweise in der Höhe mit dem Abstreifer, insbesondere mit dessen Abstreifer-Schenkel, überlappt - weshalb das Räummesser auch in der Höhe über dem Schneidmesser angeordnet ist - und radial innerhalb des Abstreifers rotiert nahe an dessen Abstreif-Schenkel vorbei.

Dadurch gelangt das vom Abstreifer abgelöste komprimierte Mähgut sofort in den Wirkbereich des Räummessers und wird zuverlässig von diesem zerkleinert bevor es herabfällt auf dem Untergrund.

Das Räummesser kann mit der gleichen Drehzahl rotieren wie das Schneidmesser.

Insbesondere sind die Schneidmesser-Achse und/oder die Räummesser-Achse und/oder die Drehachse, mit der die Umfangswand relativ zum Gehäuse-Oberteil rotiert, identisch.

Vorzugsweise weist das Räummesser einen mit seinem freien Ende nach oben weisenden Räummesser-Schenkel auf, welcher in der Höhe mit dem Abstreifer überlappt.

Das Räummesser kann mit seinem etwa horizontal verlaufenden Befestigungs-schenkel direkt oder indirekt mit dem wenigstens einen Schneidmesser verbunden sein kann, was eine besonders einfache Konstruktion ergibt.

In vielen Fällen sind nicht ein, sondern über den Umfang verteilt mehrere Schneidmesser vorhanden, die dann - meist gelenkig um eine Hochachse - am Außenumfang einer rotierenden Messerscheibe befestigt sind, die von dem Schneidmesser-Antrieb rotierend in einer im Mähbetrieb etwa horizontalen Ebene angetrieben wird.

Die Räummesser können dann ebenfalls an dieser Messerscheibe befestigt werden, sei es drehfest oder ebenfalls gelenkig um eine Hochachse, was dem Ausweichen von Hindernissen möglichst ohne Zerstörung des Messers dienen soll.

In der Regel dreht sich die Umfangswand des Gehäuses immer nur in eine Richtung relativ zum Gehäuse-Oberteil. Damit der Abstreifer eine gute Ablösewirkung erzielt, ist er schräggestellt zur radialen und/oder tangentialen Richtung und besitzt einen in Drehrichtung der Umfangswand zunehmenden Abstand zu seiner Drehachse. Dadurch ist er in der Lage, mit seiner Vorderkante, die der Innenumfangswand radial am nächsten steht, das dort anhaftende Mähgut abzuschaben und durch die Schrägstellung radial nach innen zu leiten, vorzugsweise in den Wirkbereich des Räummessers hinein.

Das Räummesser, insbesondere dessen nach oben aufragender Messer-Schenkel, steht vorzugsweise schräg zur Rotationsachse, um 30° bis 110°, insbesondere um 50° bis 90°, insbesondere um 60° bis 80°.

Unter einem nahe Heranreichen bestimmter Bauteile zueinander wird vorzugsweise ein Abstand von maximal 1,0 cm, besser maximal 0,5 cm, besser maximal 0,3 cm zwischen den jeweiligen beiden Bauteilen verstanden.

Der Abstreif-Schenkel des Abstreifers sollte in radialer Richtung relativ kurz sein, um während des Entlanggleitens des abgelöstes Mähgutes entlang des schräg stehenden Abstreif-Schenkels noch kein Herabfallen auf den Untergrund zu ermöglichen, bevor dieses komprimierte Mähgut radial anschließend weiter innen das Räummesser zum Zerkleinern erreicht hat, also eine radiale Erstreckung von maximal 5 cm, besser maximal 4 cm, besser maximal 3 cm, besser maximal 2 cm.

Um das leichtere Eintreten des Bewuchses in den Wirkbereich des Schneidmessers zu ermöglichen, ist die Umfangswand, vor allem in ihrem nach unten frei auslaufenden unteren Endbereich, vor allem nach radial innen, möglichst elastisch ausgebildet und besitzt eine Biegesteifigkeit von unter 3 N/mm², insbesondere unter 2 N/mm², insbesondere unter 1 N/mm².

Als Steinschlagschutz weist die Umfangswand des Gehäuses vorzugsweise zwei in radialer Richtung aufeinander folgende, separate Wand-Lagen auf, die vorzugsweise einander kontaktieren und über den Umfang des Gehäuses durchgehen.

Die so aufgebaute Umfangswand ist zumindest in ihrem unteren Bereich nach radial innen sehr elastisch, sodass sie von dem abzumähenden Gras nach innen umgebogen werden kann ohne das Gras flach zu drücken, andererseits zumindest in dem oberen Bereich darüber nach radial außen aber ausreichend stabil und steif in radialer Richtung ist, um einen ausreichenden Steinschlagschutz zu bieten, also durch das Schneidmesser beschleunigten Teilen aufzuhalten und deren Wegfliegen aus dem Gehäuse heraus zu verhindern.

Dabei ist die äußere Wand-Lage - für sich alleine betrachtet - im montierten Zustand, also wenn nur diese eine Wandlage montiert wäre, in radialer Richtung, zumindest nach radial innen, biegsamer als die allein montierte innere Wand-Lage.

Vorzugsweise steht die biegsamere, äußere Wand-Lage nach unten über die steifere Wand-Lage vor und reicht insbesondere bis unmittelbar oberhalb der Rotationsebene des Schneidmessers, sodass vom Schneidmesser getroffene feste Körper wie Steine höchstens in horizontaler Richtung wegfliegen können und durch die Schwerkraft und den Bewuchs nach kurzer Distanz gestoppt werden, aber nicht auf einer ansteigenden Flugbahn wegfliegen können.

Insbesondere steht die biegsamere, äußere Wand-Lage nach unten um
- mindestens 2 cm, besser mindestens 3 cm, besser mindestens 4 cm besser mindestens 5 cm
   und/oder
- um mindestens 15 %, besser mindestens 30 %, besser mindestens 40 % besser mindestens 50 % der Höhe der steiferen Wand-Lage 18 vor.

Die beiden Wandlagen stehen zumindest an ihrem oberen Rand miteinander in Kontakt, da sie vorzugsweise zwischen einem oberen, um die beiden Wandlagen herum verlaufenden, äußeren Randelement und dem Außenumfang eines vorzugsweise parallel zur Schneid-Ebene liegenden Innenring gehalten werden, insbesondere verklemmt sind, sodass dieses insbesondere obere Randelement, samt der beiden Wandlagen leicht lösbar am Innenring befestigt ist und insbesondere festgespannt ist.

Unter leicht lösbar wird in diesem Zusammenhang das Lösen ohne Werkzeug oder nur mit einem Standard-Werkzeug wie einem Schraubendreher oder Schraubenschlüssel verstanden und dies innerhalb von weniger als 1 Minute., besser weniger als 30 Sekunden, denn diese beiden Wandlagen sind Verschleißteile und müssen relativ oft gewechselt werden.

Die gesamte Einheit aus Innenring, Umfangswand und äußerem Randelement - das sogenannte Gehäuse-Drehteil - ist drehbar um eine Drehachse, die insbesondere identisch mit der Rotationsachse der Schneidmesser ist, drehbar, insbesondere um den Umfang eines plattenförmigen Gehäuse-Oberteiles.

Beim Herumführen des Scheiben-Mähkopfes um ein Hindernis wie etwa ein Verkehrsschild rollt das gummierte äußere Randelement an dem Außenumfang des Hindernisses ab und beschädigt dieses nicht und zwischen beiden besteht eine ausreichend große Haftreibung, sodass das Gehäuse-Drehteil hierdurch zuverlässig in Drehung versetzt wird.

Deshalb muss auch der Steinschlagschutz über den gesamten Umfang umlaufend gleich ausgebildet sein, da im Gegensatz zu einem Walzen-Mähkopf, bei dem als Steinschlagschutz nach vorne häufig ein Kettenvorhang verwendet wird, jeder der Umfangsbereiche der nach vorn gerichtete Umfangsbereich sein kann.

Der Zusammenhalt zwischen den einzelnen Elementen besteht dadurch, dass das obere äußere Randelement ein endliches, zugfestes streifenförmiges Randelement ist, insbesondere ein Stahlband, mit einer Gummierung zumindest auf seiner Außenseite, welches aber ausreichend elastisch ist, um um den Außenumfang des Innenringes herumgelegt werden zu können.

Vorzugsweise stehen von diesem äußeren Randelement Bolzen, die an ihm befestigt sind, radial nach innen vor und ragen durch die erste und zweite Wand-Lage hindurch, die auf diese Gewindebolzen mit entsprechenden Durchgangsöffnungen aufgefädelt werden können.

Der radiale Überstand über die innere der beiden Wandlagen nach innen wird zur Befestigung benutzt, indem er in entsprechende Ausnehmungen, insbesondere Sacklöcher, im Außenumfang des Innenringes eingesteckt werden kann.

Einer der Bolzen befindet sich etwa in der Mitte der umlaufenden Länge des äußeren Randelementes, ist als Gewinde-Bolzen ausgebildet und dient einer Vorfixierung mittels Verschrauben an einer Stelle des Außenumfanges des Innenringes.

Jeweils ein Spannelement, insbesondere ein - in der Aufsicht winkelförmiger - Endwinkel ist an jeweils einem Ende des endlichen Randelementes befestigt. Die beiden anderen, gegeneinander weisenden, Schenkel des Endwinkels können gegeneinander in Umfangsrichtung verschraubt werden, wodurch das obere Randelement mit starker Vorspannung am Außenumfang des Innenringes anliegt und die beiden Schichten zwischen äußerem Randelement und dem Innenring verklemmt werden.

Die Umfangswand, insbesondere deren biegsame äußere Wandlage, ist in Umfangsrichtung durchgängig vorhanden, ggfs. mit einer Überlappungsstelle in Umfangsrichtung.

Dadurch ist eine einfachere Herstellung aus einem endlichen Teil statt aus einem ringförmig geschlossenen Teil, welches immer an den Durchmesser des Gehäuses angepasst sein muss, möglich.

Die zweite, steifere Wand-Lage ist dabei vorzugsweise die innere Wand-Lage, denn dadurch wird verhindert, dass die dann äußere biegsame Wand-Lage durch den Luftstrom, der nach radial innen gerichtet ist und fast unvermeidbar durch das rotierende Schneidmesser erzeugt wird, diese biegsame Schicht radial nach innen saugt und diese dadurch funktionslos macht.

Die zweite, steifere Wand-Lage besteht zumindest im unteren Teil aus in Umfangsrichtung aufeinander folgende, ggfs. auch geringfügig beabstandete oder überlappende, Wandteile, insbesondere einzelne Wand-Platten, die aber auch im oberen Bereich miteinander verbunden sein können zu einer bandförmigen zweiten Wand-Lage, die durch Schlitzungen von unten her lediglich nach unten frei auslaufende einzelne Wand-Zungen aufweist.

Die Flexibilität der einzelnen Zungen ist dadurch größer als bei einem über die gesamte Höhe umlaufenden Band der zweiten steiferen Wandschicht.

Die erste biegsamere Wand-Lage, die vorzugsweise radial außen liegt, besteht vorzugsweise aus einer flexiblen Folie oder einem Gewebe, vorzugsweise aus Kunststoff.

Die erste biegsamere Wand-Lage, die vorzugsweise radial außen angeordnet ist, ragt weiter nach unten als die zweite Wandschicht, die vorzugsweise radial innen angeordnet ist, und zwar vorzugsweise um mindestens 50 %, besser mindestens 100 % der axialen Erstreckung der ersten Wand-Lage. Dadurch kann das sich von vorne nähernde, abzumähende Ende Gras diesen Überstand de der leichteren Wand-Lage, etwa einer flexiblen Folie oder einem flexiblen Gewebe, unter dem unteren Ende der zweiten, stabileren Wand-Lage leicht nach innen umbiegen, ohne selbst flachgedrückt zu werden.

Die steifere Wand-Lage besteht vorzugsweise auch aus Kunststoff, beispielsweise aus Vulcolan.

Die äußere, biegsame Wand-Lage hat vorzugsweise eine Biegesteifigkeit von unter 5 N/mm², insbesondere unter 3 N/mm², insbesondere unter 3 N/mm², insbesondere unter 1 N/mm²,

Die innere, steifere Wand-Lage hat insbesondere eine Biegesteifigkeit zwischen 5 N/mm² und 30 N/mm², insbesondere zwischen 7 N/mm² und 22 N/mm², insbesondere zwischen 9 N/mm² und 16 N/mm², dass er nicht durch das sich annähernde Gras umgebogen werden muss.

Dabei dient die steifere, innere Wand-Lage primär dem Steinschlagschutz, und ist auch die verschleißfestere Lage, die als Verschleißschutz für die biegsamere äußere Wand-Lage dient, die zwar nur einen geringen Schutz für leichte, nach außen wegfliegenden Teile bietet, aber vor allem dem radial von außen nach innen in den Messerbereich eintretende Gras nur einen geringen Widerstand entgegensetzt.

Deshalb besitzt die äußere, biegsame Wand-Lage vorzugsweise eine Härte zwischen 30 Shore und 3 Shore, insbesondere zwischen 20 Shore und 3 Shore, insbesondere zwischen 10 Shore und 3 Shore.

Die innere, steifere Wand-Lage hat insbesondere eine Härte zwischen 50 Shore und 90 Shore, insbesondere zwischen 60 Shore und 80 Shore, insbesondere zwischen 65 Shore und 75 Shore.

Die erste, hinsichtlich zumindest des Flächengewichtes, leichtere Wand-Lage hat vorzugsweise ein Flächengewicht zwischen 1,1 kg/m². und 1,6 kg/m², insbesondere zwischen 1,25 kg/m² und 1,55 kg/m², insbesondere zwischen 1,35 kg/m². und 1,45 kg/m².

Die zweite, hinsichtlich zumindest des Flächengewichtes, schwerere Wand-Lage hat vorzugsweise ein Flächengewicht zwischen 2,0 kg/m². und 6,0 kg/m², insbesondere zwischen 3,0 kg/m² und 4,5 kg/m², insbesondere zwischen 3,5 kg/m². und 4,0 kg/m².

Unter Flächengewicht wird dabei das Gewicht pro Flächeneinheit entlang der Hauptebene der jeweiligen Lage verstanden.

Die äußere biegsame Wand-Lage hat vorzugsweise ein spezifisches Gewicht zwischen 1,1 kg/m³. und 2,0 kg/m³, insbesondere zwischen 1,4 kg/m³ und 1,7 kg/m³, insbesondere zwischen 1,5 kg/m³. und 1,6 kg/m³.

Die innere steifere Wand-Lage hat vorzugsweise ein spezifisches Gewicht zwischen 0,8 kg/m³. und 1,7 kg/m³, insbesondere zwischen 1,1 kg/m³ und 1,4 kg/m³, insbesondere zwischen 1,2 kg/m³ und 1,3 kg/m³. Ihr spezifisches Gewicht kann also durchaus geringer sein als das der äußeren, biegsameren Wandlage, da hierbei die sehr viel größere Dicke, insbesondere um den Faktor 5, insbesondere um den Faktor 10, insbesondere um den Faktor 20, der inneren Wandlage gegenüber der äußeren Wandlage eine Rolle spielt.

Da für beide Lagen vorzugsweise Kunststoff verwendet wird und Kunststoff-Materialien mit unterschiedlichen spezifischen Gewichten und Biegesteifigkeiten vielfältig am Markt vorhanden sind, können Biegesteifigkeit, Flächengewicht und spezifisches Gewicht sehr gut an die Art des abzumähenden Bewuchses angepasst werden.

Der gesamte Scheiben-Mähkopf ist vorzugsweise in der Aufsicht betrachtet rotationssymmetrisch aufgebaut, sodass die Schneidmesser-Achse und die Drehachse der Umfangswand vorzugsweise identisch sind.

### c) Ausführungsbeispiele

Ausführungsformen gemäß der Erfindung sind im Folgenden beispielhaft näher beschrieben. Es zeigen:
- **Figur 1:**: eine Mäh-Einheit aus einem Walzen-Mähkopf und einem an dessen einen Endbereich befestigten Scheiben-Mähkopf als Zusatz-Scheiben-Mähkopf,
- **Figur 2:**: einen Vertikalschnitt durch den Scheiben-Mähkopf der **Figur 1****,**
- **Figur 3a:**: eine Aufsicht von oben auf den Scheiben-Mähkopf gemäß der Linie A - A in **Figur 2****,**
- **Figur 3b:**: eine Ansicht von unten auf den Scheiben-Mähkopf gemäß der Linie B - B in **Figur 2****.**

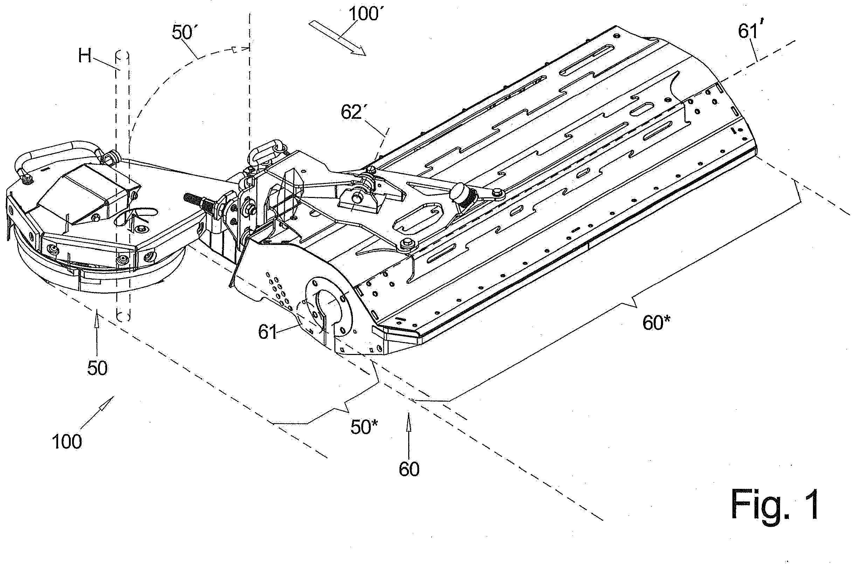

**Figur 1** zeigt den erfindungsgemäßen Scheiben-Mähkopf 50 in einem typischen Anwendungsfall, nämlich als Zusatz-Scheiben-Mähkopf 50 in einer Mäh-Einheit 100 zu einem Walzen-Mähkopf 60, dessen Mähspur 60* wesentlich breiter ist aufgrund einer mit ihrer Rotationsachse 61' horizontal, quer zur Mäh-Richtung 100' der Mäh-Einheit 100, liegenden Walzen-Messerwelle 61.

Der Scheiben-Mähkopf 50 besitzt in der dargestellten Arbeitsstellung - aus der er meist um eine horizontal, schräg zur Mäh-Richtung 100' liegende, Klappachse 62' hochgeklappt werden kann in eine Transportstellung über dem Walzen-Mähkopf 60 - eine deutlich schmalere Mäh-Spur 50*, die sich seitlich zumindest teilweise neben der Mäh-Spur 60* verläuft und geringfügig mit dieser überlappt.

Bei einem sich auf dieser Mähspur 50* annähernden Hindernis H wird der Scheiben-Mähkopf 50 um eine aufrechte Schwenkachse 50' verschwenkt in Richtung der Mitte der Mähspur 60*, ausgelenkt durch Kontakt mit dem Hindernis H, und danach wieder zurückgeschwenkt in die dargestellte Ausgangsstellung mittels einer nicht sichtbaren Feder, meist einer Gasdruck-Feder, deren Vorspannung meist einstellbar ist durch die hier Nieren-förmige Öffnung in der Oberseite des Gehäuses des Zusatz-Scheiben-Mähkopfes 50.

Dadurch kann der Walzen-Mähkopf 60 seine Mäh-Richtung 100' ohne Änderung fortsetzen, und der Bewuchs wird bis nahe an das Hindernis H heran abgemäht auf der Seite der Mail-Einheit 100.

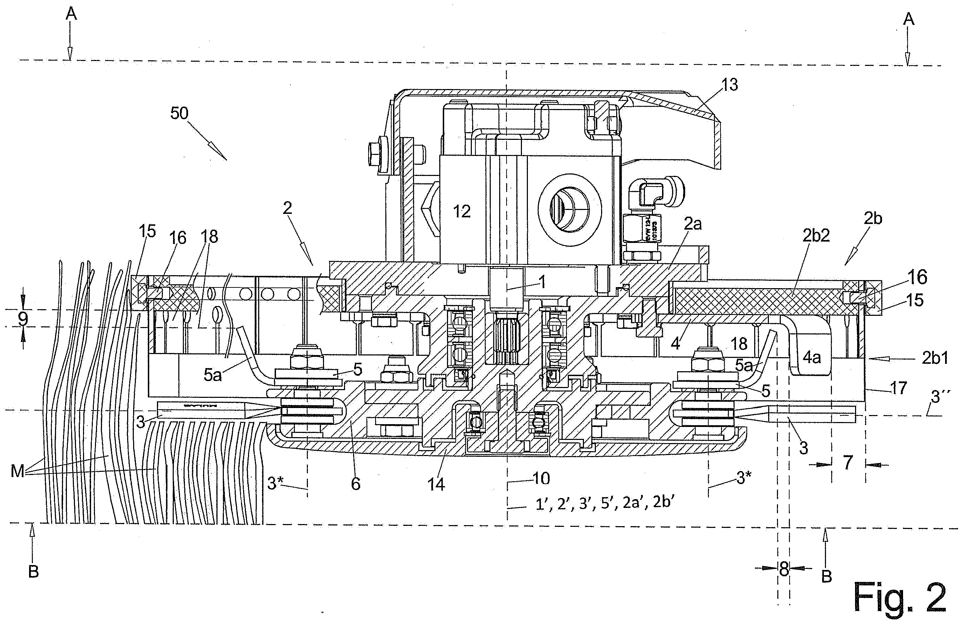

Der Vertikalschnitt der **Figur 2** lässt erkennen, dass die Schneidmesser 3 um eine im Mäh-Betrieb aufrecht stehende, meist vertikal stehende, Rotationsachse 3' - der axialen Richtung 10, die im Mähbetrieb meist auch die Vertikale 10 ist - rotieren und dadurch an ihrer in Mäh -Richtung 100' vorderen Seite sich annäherndes Mähgut M wie etwa Grashalme abmähen. Die Schneidmesser können dabei einen Anstellwinkel nach oben aufweisen zum Ablenken des abgemähten Mähgutes M zunächst nach oben.

Als Messerebene 3" kann dabei die Mitte der Höhe der Schneidmesser 3 an ihren äußeren freien Enden definiert werden.

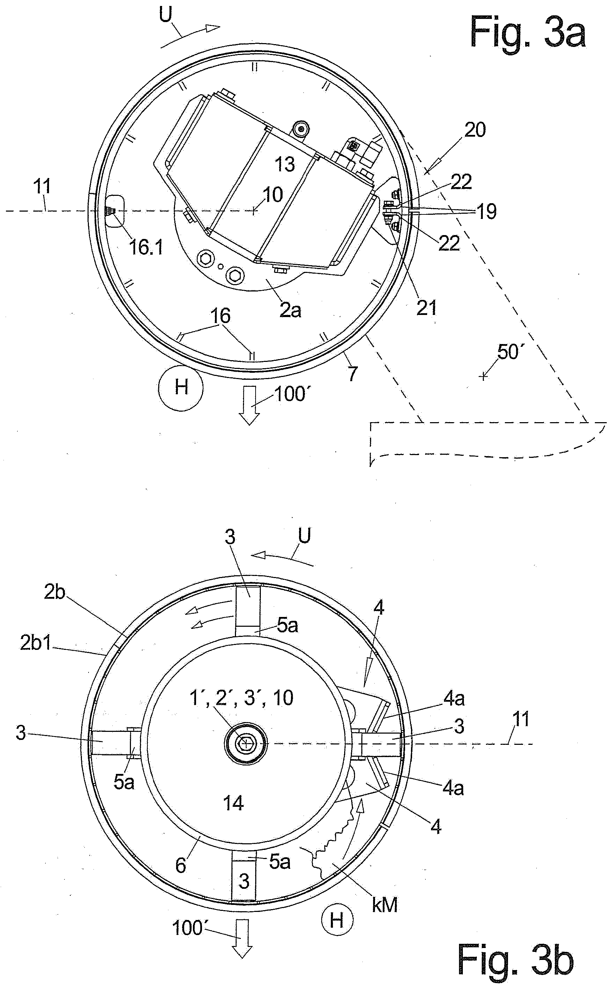

Die Schneidmesser 3 - wie die Ansicht der **Figur 3b** von unten zeigt, handelt es sich dabei um vier über den Umfang verteilte Schneidmesser 3 - sind in diesem Fall nicht direkt an der aufrecht stehenden, rotierenden Messerwelle 1 befestigt, sondern im Umfangsbereich einer Mäh-Scheibe 6, die am unteren freien Ende der Messerwelle 1 befestigt ist und in der Schneidmesser-Ebene 3" rotiert.

Das untere Ende der Messerwelle 1 sowie die Unterseite der Mähscheibe 6 sind durch eine dort angebrachte untere Abdeckung 14 geschützt, die etwa horizontal liegend bis etwa zum radial äußeren Rand der Mäh-Scheibe 6 reicht.

Die Schneidmesser 3 sind dabei um eine aufrechte Schneidmesser-Gelenkachse 3* an der Mäh-Scheibe 6 befestigt, sodass sie von einem harten Mähgut M ausgelenkt werden können.

Die Messerwelle 1 ist in einem plattenförmigen, im Mäh-Betrieb etwa horizontal liegenden, Gehäuse-Oberteil 2a gelagert und wird von einem darauf sitzenden Motor 12 angetrieben, der von einer sich darüber hinweg erstreckenden oberen Abdeckung 13 geschützt ist.

Das Gehäuse 2 umfasst neben dem Gehäuse-Oberteil 2a ein Gehäuse-Drehteil 2b mit einem plattenförmigen Dreh-Ring 2b2, der gegenüber dem umfänglichen Randbereich des Gehäuse-Oberteiles 2a drehbar, insbesondere in einer Ebene parallel zur Schneidmesser-Ebene 3" - gelagert ist, und von deren äußeren Rand sich eine daran befestigte Umfangswand 2b1 nach unten erstreckt bis auf die Höhe oder knapp oberhalb der Schneidmesser 3.

Das Gehäuse-Drehteil 2b wird lediglich in Drehung versetzt durch Kontaktieren und Abrollen seines äußeren Umfanges an einem daran entlang gleitenden Hinderniss H, und ist vorzugsweise nicht mit der Messerwelle 1 wirkverbunden.

Erfindungswesentlich ist, dass ein Abstreifer 4 in Form eines Blech-Winkels an der Unterseite des Gehäuse-Oberteil 2a so befestigt so ist, dass der vom parallel zum Dreh-Ring 2b2 liegende Befestigungs-Schenkel nach unten in das Gehäuse hinein abragende Abstreif-Schenkel 4a sich bis nahe bis auf einen Abstand 7 an die Innenfläche der Umfangswand 2b1 erstreckt, wie in **Figur 3b** ersichtlich, und dieser Abstreif -Schenkel 4a zusätzlich schräg gestellt ist zur axialen Richtung 10, den in diesem Fall übereinstimmenden Rotationsachsen 1', 2' und 3'.

Dadurch wird der - wie das Gehäuse-Oberteil 2a - im Betrieb nicht rotierende Abstreifer 4 bei einer Drehung des Gehäuse-Drehteiles 2b durch Abrollen an einem Hindernis H - wie in **Figur 3b** ersichtlich - so gedreht, dass der Abstreif-Schenkel 4a das an der Innenfläche der Umfangswand 2b1 abgelagerte komprimierte Mähgut kM abschabt. Hierfür ist der Abstreif-Schenkel 4a so schräg gestellt, dass das in Drehrichtung der Umfangs Wand 2b1 hintere Ende weiter von der Innenseite der Umfangswand 2b1 entfernt ist als sein vorderes Ende.

Vorzugsweise sind in diesem Fall zwei solche Abstreif-Schenkel 4a spiegelbildlich zur radialen Richtung 11 dazwischen angeordnet, mit jeweils gleichem Abstand zur Innenfläche der Umfangswand 2b1, um unabhängig von der Drehrichtung der Umfangswand 2b1 - die sich bei Wechsel der Anordnung am linken oder rechten Ende des Walzen-Mähkopfes 60 ändert - ein solches Abschaben stattfindet.

Wie **Figur 2** zeigt, sind an der rotierbaren Mähscheibe 6 nicht nur die Schneidmesser 3 befestigt, sondern auch Räummesser 5, vorzugsweise auf der gleichen Befestigungsposition in Umfangsrichtung der Mähscheibe 6 wie die Schneidmesser 3.

Die Räummesser 5 bestehen ebenfalls aus einem Blechwinkel und umfassen einen schräg zur Messerebene 3", also im Mähbetrieb meist der horizontalen Ebene, von der Mähscheibe 6 nach oben, hier schräg nach radial außen und oben bis auf einen Höhen-Abstand 9 zur Unterseite des Dreh-Ringes 2b2, aufsteigenden Räum-Schenkel 5a, der somit mit der Mähscheibe 6 und den Schneidmessern 3 mit rotiert. Das Räummesser 5, insbesondere dessen vom äußeren Ende von dessen Befestigungsschenkel, der insbesondere tiefer angeordnet ist als der Abstreifer 4, abragende Räum-Schenkel 5a, ist so positioniert, dass er radial innerhalb der feststehenden, nicht rotierenden Abstreifer 4, insbesondere deren sich in der Höhe erstreckenden Abstreif-Schenkeln 4a in relativ geringem Abstand 8, also nahe an diesen, vorbei rotieren kann, wobei der Abstreif-Schenkel 4a und der Räum-Schenkel 5a in der Höhe, also in axialer Richtung 10, überlappen.

Auf diese Art und Weise wird das vom Abstreifer 4 meist in großen Stücken abgelöste komprimierte Mähgut kH von dem Räum -Schenkel 5a zerkleinert.

Die Umfangswand 2b1, die im Wesentlichen dazu dient, von den Schneidmessern 3 getroffene Steine sowie das abgetrennte Mähgut an einem Wegfliegen in radialer Richtung 11 über den Umfang des Gehäuses 2 hinaus abzuhalten, ist aus zwei radial aufeinander folgenden Lagen 17, 18 aufgebaut, die am Außenumfang des Dreh-Ringes 2b2 befestigt sind, z.B. mittels eines radial außerhalb der beiden Lagen des Gehäuses 2 umlaufenden äußeren Randelementes 15. Um beim Abrollen an einem Hindernis H eine gute Friktion sicherzustellen und gleichzeitig ein einfaches Wechseln der Umfangswand 2b1 oder von dessen Teilen - die Verschleißteile sind - zu ermöglichen, ist das äußere Randelement 15 ein endliches Stück eines zugfesten, elastischen, zumindest auf der Außenseite gummierten, Bandes, vorzugsweise eines gummierten Stahlbandes 15.

An diesem Randelement 15 können nach radial innen ragende Bolzen 16, insbesondere einer davon ein Gewinde-Bolzen 16.1, befestigt sein, auf die dann radial von innen zunächst die 1., flexiblere und oft leichtere, Wandlage 17 in Form einer Folie 17 und danach die 2., weniger flexible und oft schwerere, Wandlage 18 in Form von Wand-Platten 18 mittels entsprechender Durchgangsöffnungen aufgefädelt werden. Dabei steht im montierten Zustand die 1. Wandlage 17 nach unten über die 2. Wandlage 18 vor, insbesondere um mindestens 30 %, besser mindestens 50 %, besser mindestens 70 % der axialen Erstreckung der 1. Wandlage.

Anschließend wird dieses äußere Randelement 15 um den Umfang des Dreh-Ringes 2b2 gelegt und ein Gewinde-Bolzen 16.1 gegenüber dem Dreh-Ring 2 b2 befestigt zur Vorfixierung des äußeren Randelementes 15. Dabei befindet sich der Gewinde-Bolzen 16.1 vorzugsweise in der Mitte der Länge des Randelementes 15.

Weitere entlang des Randelementes 15 vorhandene Bolzen 16 - die kein Außengewinde wie der Gewinde-Bolzen 16.1 aufweisen müssen - können dabei in entsprechende Ausnehmungen, meist Sacklöcher, in den Außenumfang des Dreh-Ringes 2b2 gesteckt werden.

Anschließend werden die in Umfangsrichtung U dann aufgrund entsprechender Länge des Randelementes 15 nahe benachbarten Enden dieses äußere Randelementes 15 mittels einer Umfangs-Spannvorrichtung 20, die von oben her zugänglich ist, in Umfangsrichtung U gegeneinander gespannt, bis das äußere Randelement 15 mit einer vorgegebenen radialen Anpresskraft die beiden Lagen 17, 18 der Umfangswand 2b1 in deren oberen Endbereich gegen den Dreh-Ring 2b2 pressen, von wo Lagen 17, 18 sich frei endend nach unten erstrecken.

Die Umfangs-Spannvorrichtung 20 kann zwei stabile, nicht flexible, Endwinkel 22 umfassen, die jeweils mit einem ihrer Schenkel an je einem der Endbereiche des endlichen Randelementes 15 befestigt, beispielsweise verschraubt, sind, sodass deren zueinander benachbart liegende andere Schenkel mittels einer Spannschraube 21 in Umfangsrichtung U gegeneinander gespannt werden können und damit auch das Randelement 15 in Umfangsrichtung U gespannt wird.

Da hierbei die in der Regel in Umfangsrichtung U fix am Randelement 15 positionierten Bolzen 16 ihre Position in Umfangsrichtung ändern, sollten die Durchgangsöffnungen in den beiden Lagen 17, 18 der Umfangswand 2b1 in Umfangsrichtung U entsprechend groß dimensioniert sein, insbesondere als Langlöcher gestaltet und/oder ebenso die Ausnehmungen, meist Sacklöcher im Umfang des Dreh-Ringes 2b1.

### BEZUGSZEICHENLISTE

- 1: Messerwelle, Scheiben-Messerwelle
- 1': Rotationsachse
- 2: Gehäuse
- 2a: Gehäuse-Oberteil
- 2b: Gehäuse-Drehteil
- 2b1: Umfangswand
- 2b2: Drehring
- 2b': Rotation-Achse
- 3: Schneidmesser
- 3': Schneidmesser-Rotationsachse
- 3*: Schneidmesser-Gelenkachse
- 3": Messerebene
- 4: Abstreifer
- 4a: Abstreif-Schenkel
- 5: Räummesser
- 5': Räummesser-Achse
- 5a: Räum-Schenkel
- 6: Mähscheibe
- 7: Abstand
- 8: Abstand
- 9: Abstand
- 10: axiale Richtung, Vertikale
- 11: radiale Richtung
- 12: Motor
- 13: obere Abdeckung
- 14: untere Abdeckung
- 15: äußeres Randelement
- 16: Radial-Bolzen
- 17: 1. Wandlage, Folie, Gewebe
- 18: 2. Wandlage, Wandplatte, Wandzunge
- 19: End-Winkel
- 20: Spannvorrichtung
- 21: Spannschraube
- 22: Endwinkel

- 50: Scheiben-Mähkopf, Zusatz-Scheiben-Mähkopf

- 60: Walzen-Mähkopf
- 61: Messerwelle, Walzen-Messerwelle
- 61': Rotationsachse
- 62': Klappachse

- 100: Mäh-Einheit
- 100': Mäh-Richtung

- H: Hindernis
- kM: komprimiertes Mähgut
- U: Umfangs-Richtung.

## Patentansprüche

1. **Scheiben-Mähkopf** (50), insbesondere Zusatz-Scheiben-Mähkopf (50) zu einem z.B. Walzen-Mähkopf (60), wobei der Scheiben-Mähkopf (50) enthält:
- ein haubenartiges, unten wenigstens teilweise offenes Gehäuse (2),
- wenigstens ein in oder unterhalb des Gehäuses (2) rotierend um eine aufrecht stehende Schneidmesser-Achse (3') antreibbares Schneidmesser (3), wobei
- innerhalb einer Umfangswand (2b) des Gehäuses (2) ein Abstreifer (4) angeordnet ist und eine Innenseite der Umfangswand (2b) relativ zum Abstreifer (4) in Umfangsrichtung (U) beweglich ist, und
- ein rotierend im Gehäuse (2) um eine Räummesser-Achse (5') antreibbares Räummesser (5), welches mit dem Abstreifer (4) überlappt, in radialer Richtung (11) innerhalb des Abstreifers (4) rotiert und dabei nahe an dessen Abstreif-Schenkel (4a) vorbeiläuft,
**dadurch gekennzeichnet, dass**
- in der Aufsicht betrachtet der Abstreifer (4) in Umfangsrichtung (U) zwei Abstreif-Schenkel (4a) oder einen Abstreif-Schenkel mit zwei SchenkelAbschnitten aufweist, die nach unten in das Gehäuse (2) ragen und sich nahe bis auf einen Abstand (7) an die Innenfläche der Umfangswand (2b1) des Gehäuses (2) erstrecken und schräg zur radialen Richtung (11) stehen mit einem kleineren Abstand zur Rotationsachse (5') des Räummessers (5) am jeweils in Umfangsrichtung (U) zum anderen Abstreifer (4) oder Schenkel-Abschnitt hin weisenden Ende.

2. Scheiben-Mähkopf nach Anspruch 1,
**dadurch gekennzeichnet, dass**
- wenigstens ein Teil der Umfangswand (2b) des Gehäuses (2) Bestandteil eines Gehäuse-Drehteiles (2b) ist und drehbar ist gegenüber einem nicht drehbaren Gehäuse-Oberteil (2a)
und
- der Abstreifer (4) an einer Unterseite des nicht drehbaren Gehäuse-Oberteils (2a) innerhalb der Umfangswand angeordnet ist.

3. Scheiben-Mähkopf nach einem der vorhergehenden Ansprüche,
**dadurch gekennzeichnet, dass**
- das Räummesser (5) in der Höhe mit dem Abstreifer (4), insbesondere dessen Abstreif-Schenkel (4a), überlappt.

4. Scheiben-Mähkopf nach Anspruch 2 oder einem der vorherigen Ansprüche, wenn abhängig von Anspruch 2,
**dadurch gekennzeichnet, dass**
- das Räummesser (5) einen, insbesondere mit einem freien Ende nach oben weisenden, Räum-Schenkel (5a) aufweist,
- der bis nahe an die Unterseite des Gehäuse-Oberteils (2a) heranreicht.

5. Scheiben-Mähkopf nach einem der vorhergehenden Ansprüche,
**dadurch gekennzeichnet, dass**
- die Innenseite der Umfangswand (2b) um eine Rotationsachse (2b') der Umfangswand (2b) drehbar ist.

6. Scheiben-Mähkopf nach einem der vorhergehenden Ansprüche,
**dadurch gekennzeichnet, dass**
- mindestens je zwei Rotationsachsen aus Schneidmesser-Achse (3') und/oder Räummesser-Achse (5') und/oder Drehachse (2a') der Umfangswand (2a) maximal um 5 cm, besser maximal um 3 cm, besser maximal 2 cm zueinander beabstandet sind,
- insbesondere mindestens je zwei, vorzugsweise alle drei dieser Rotationsachsen identisch sind.

7. Scheiben-Mähkopf nach einem der vorhergehenden Ansprüche,
**dadurch gekennzeichnet, dass**
- das wenigstens eine Schneidmesser (3), insbesondere gelenkig, um eine aufrecht stehende Schneidmesser-Gelenkachse (3*) an einer rotierend um die Schneidmesser-Rotationsachse (3') angetriebenen Mähscheibe (6) befestigt ist
und/oder
- das wenigstens eine Räummesser (5), insbesondere drehfest, an einer rotierend um die Schneidmesser-Rotationsachse (3') angetriebenen Mähscheibe (6) und/oder einer um eine Rotationsachse (1') rotierenden Messerwelle (1) befestigt ist,
- insbesondere Schneidmesser (3) und Räummesser (5) an der gleichen Mähscheibe (6) oder Messerwelle (1) befestigt sind.

8. Scheiben-Mähkopf nach einem der vorhergehenden Ansprüche,
**dadurch gekennzeichnet, dass**
ein kleinster radialer Abstand (7) des Abstreif-Schenkels (4a) zur Innenseite der Umfangswand
- maximal 10 %, besser maximal 5 %, besser maximal 3 % eines Radius der Innenseite der Umfangswand (2b1) beträgt
und/oder
- maximal 1,0 cm, besser maximal 0,5 cm, besser maximal 0,3 cm beträgt.

9. Scheiben-Mähkopf nach Anspruch 2 oder einem der vorherigen Ansprüche, wenn abhängig von Anspruch 2,
**dadurch gekennzeichnet, dass**
ein kleinster radialer Abstand (8) eines, vorzugsweise im radialen Bereich eines im Betrieb etwa horizontal liegenden Dreh-Ringes (2b2) des Gehäuse-Drehteiles (2b) angeordneten Räummessers (5) zum Abstreif-Schenkel (4a)
- maximal 10 %, besser maximal 5 %, besser maximal 3 % eines Radius eines Flugkreises des Räummessers (5) beträgt
und/oder
- maximal 1,0 cm, besser maximal 0,5 cm, besser maximal 0,3 cm beträgt.

10. Scheiben-Mähkopf nach Anspruch 2 oder einem der vorherigen Ansprüche, wenn abhängig von Anspruch 2,
**dadurch gekennzeichnet, dass**
ein kleinster axialer Abstand (9) des Räummessers (5) zu einer Unterseite des im Betrieb etwa horizontal liegenden Dreh-Ringes (2b2) des Gehäuse-Drehteiles (2b)
- maximal 15 %, besser maximal 10 %, besser maximal 5 % einer inneren lichten Höhe des Gehäuses beträgt
und/oder
- maximal 1,5 cm, besser maximal 1,0 cm, besser maximal 0,5 cm beträgt.

11. Scheiben-Mähkopf nach einem der vorhergehenden Ansprüche,
**dadurch gekennzeichnet, dass**
- die Umfangswand (2b1) wenigstens in ihrem unteren Endbereich elastisch ausgebildet ist,
- insbesondere mit einer Biegesteifigkeit von unter 3 N/mm², insbesondere unter 2 N/mm², insbesondere unter 1 N/mm².

12. **Verfahren** zum Abmähen von Bewuchs mit einem Scheiben-Mähkopf (50) nach einem der vorhergehenden Ansprüche,
**dadurch gekennzeichnet, dass**
- an den Innenflächen des Gehäuses (2), insbesondere von dessen Umfangswand (2b1), anhaftendes komprimiertes Mähgut (kM) von dort automatisch ständig abgelöst wird, insbesondere mechanisch abgelöst wird,
- das abgelöste komprimierte Mähgut (kM) im Gehäuse (2) automatisch ständig zerkleinert wird.

13. Verfahren nach Anspruch 12,
**dadurch gekennzeichnet, dass**
- das Ablösen des komprimierten Mähgutes (kM) von der Umfangswand (2b1) mithilfe einer rotierenden Relativbewegung der Innenseite der Umfangswand (2b1) zum Rest des Gehäuses (2) mittels des dortigen Abstreifers (4) erfolgt
und/oder
- das abgelöste komprimierte Mähgut (kM) im Gehäuse (2) unter Nutzung eines Antriebes des Schneidmessers (3) zerkleinert wird.

14. Verfahren nach Anspruch 13,
**dadurch gekennzeichnet, dass**
- die Relativbewegung durch Abrollen der Umfangswand (2b1) an einem Hindernis bewirkt wird, während das Gehäuse-Oberteil (2a) diese Abroll-Bewegung nicht mit vollzieht, sondern in Drehrichtung stillsteht
und/oder
- die Relativbewegung durch den Antrieb des Schneidmessers (3) bewirkt wird,
- wobei insbesondere die Umfangswand (2b1) mit einer stark, vorzugsweise mindestens um den Faktor 10, besser um den Faktor 20, untersetzten Drehzahl gegenüber einer Drehzahl des Schneidmessers (3) im Mähbetrieb vom Schneidmesser-Antrieb aus angetrieben wird.

## Claims

1. Disc mowing head (50), in particular supplementary disc mowing head (50) for a, e.g., drum mowing head (60), wherein the disc mowing head (50) comprises:
- a hood-like housing (2) which is at least partially open at the bottom,
- at least one cutting blade (3) which is drivable in rotation about an upright cutting blade axis (3') in or below the housing (2), wherein
- a scraper (4) is arranged within a peripheral wall (2b) of the housing (2) and an inner side of the peripheral wall (2b) is movable relative to the scraper (4) in the circumferential direction (U), and
- a clearing blade (5) which is drivable in rotation in the housing (2) about a clearing blade axis (5'), which overlaps with the scraper (4), rotates in a radial direction (11) within the scraper (4) and thereby passes close to the scraper leg (4a) thereof,
**characterized in that**
- as viewed in top view, the scraper (4) has, in the circumferential direction (U), two scraper legs (4a) or a scraper leg having two leg portions, which project downward into the housing (2) and extend close to within a distance (7) of the inner surface of the peripheral wall (2b1) of the housing (2) and are inclined relative to the radial direction (11), with a smaller distance to the axis of rotation (5') of the clearing blade (5) at the respective end pointing in the circumferential direction (U) toward the other scraper (4) or leg portion.

2. Disc mowing head according to claim 1,
**characterized in that**
- at least a part of the peripheral wall (2b) of the housing (2) is a component of a rotating housing part (2b) and is rotatable relative to a non-rotating upper housing part (2a), and
- the scraper (4) is arranged at an underside of the non-rotating upper housing part (2a) within the peripheral wall.

3. Disc mowing head according to any one of the preceding claims,
**characterized in that**
- the clearing blade (5) overlaps in height with the scraper (4), in particular with the scraper leg (4a) thereof.

4. Disc mowing head according to claim 2 or any one of the preceding claims when dependent on claim 2,
**characterized in that**
- the clearing blade (5) has a clearing leg (5a), in particular one pointing with its free end upward,
- which extends close to the underside of the upper housing part (2a).

5. Disc mowing head according to any one of the preceding claims,
**characterized in that**
- the inner side of the peripheral wall (2b) is rotatable about an axis of rotation (2b) of the peripheral wall (2b).

6. Disc mowing head according to any one of the preceding claims,
**characterized in that**
- at least two axes of rotation each from the cutting blade axis (3') and/or the clearing blade axis (5) and/or the axis of rotation (2a') of the peripheral wall (2a) are spaced apart from one another by at most 5 cm, preferably at most 3 cm, preferably at most 2 cm,
- in particular at least two, preferably all three of these axes of rotation are identical.

7. Disc mowing head according to any one of the preceding claims,
**characterized in that**
- the at least one cutting blade (3) is fastened, in particular pivotably, about an upright cutting blade pivot axis (3*) to a mowing disc (6) which is driven in rotation about the cutting blade rotation axis (3'),
and/or
- the at least one clearing blade (5) is fastened, in particular in a rotationally fixed manner, to a mowing disc (6) which is driven in rotation about the cutting blade rotation axis (3') and/or to a blade shaft (1) rotating about an axis of rotation (1'),
- in particular the cutting blade (3) and the clearing blade (5) are fastened to the same mowing disc (6) or blade shaft (1).

8. Disc mowing head according to any one of the preceding claims,
**characterized in that**
a smallest radial distance (7) of the scraper leg (4a) to the inner side of the peripheral wall
- is at most 10%, preferably at most 5%, preferably at most 3% of a radius of the inner side of the peripheral wall (2b1),
and/or
- is at most 1.0 cm, preferably at most 0.5 cm, preferably at most 0.3 cm.

9. Disc mowing head according to claim 2 or any one of the preceding claims when dependent on claim 2,
**characterized in that**
a smallest radial distance (8) of a clearing blade (5), which is arranged preferably in the radial region of a rotating ring (2b2) of the rotating housing part (2b) lying approximately horizontally during operation, to the scraper leg (4a)
- is at most 10%, preferably at most 5%, preferably at most 3% of a radius of the flight circle of the clearing blade (5),
and/or
- is at most 1.0 cm, preferably at most 0.5 cm, preferably at most 0.3 cm.

10. Disc mowing head according to claim 2 or any one of the preceding claims when dependent on claim 2,
**characterized in that**
a smallest axial distance (9) of the clearing blade (5) to an underside of the rotating ring (2b2) of the rotating housing part (2b) lying approximately horizontally during operation
- is at most 15%, preferably at most 10%, preferably at most 5% of an internal clear height of the housing,
and/or
- is at most 1.5 cm, preferably at most 1.0 cm, preferably at most 0.5 cm.

11. Disc mowing head according to any one of the preceding claims,
**characterized in that**
- the peripheral wall (2b1) is of elastic design at least in its lower end region,
- in particular with a flexural rigidity of less than 3 N/mm², in particular less than 2 N/mm², in particular less than 1 N/mm².

12. Method for mowing vegetation with a disc mowing head (50) according to any one of the preceding claims,
**characterized in that**
- compressed mown material (kM) adhering to the inner surfaces of the housing (2), in particular of the peripheral wall (2b1) thereof, is automatically and continuously detached therefrom, in particular detached mechanically,
- the detached compressed mown material (kM) is automatically and continuously comminuted in the housing (2).

13. Method according to claim 12,
**characterized in that**
- the detachment of the compressed mown material (kM) from the peripheral wall (2b1) is effected by means of a rotating relative movement of the inner side of the peripheral wall (2b1) relative to the remainder of the housing (2) by means of the scraper (4) located therein,
and/or
- the detached compressed mown material (kM) is comminuted in the housing (2) using a drive of the cutting blade (3).

14. Method according to claim 13,
**characterized in that**
- the relative movement is effected by rolling of the peripheral wall (2b1) against an obstacle while the upper housing part (2a) does not follow this rolling movement but remains stationary in the direction of rotation,
and/or
- the relative movement is effected by the drive of the cutting blade (3),
- wherein in particular the peripheral wall (2b1) is driven by the cutting blade drive at a rotational speed which is greatly reduced, preferably by at least a factor of 10, preferably by a factor of 20, relative to a rotational speed of the cutting blade (3) during mowing operation.

## Revendications

1. Tête de faucheuse à disques (50), en particulier tête de faucheuse à disques supplémentaire (50) pour par exemple une tête de faucheuse à tambours (60), dans laquelle la tête de faucheuse à disques (50) comprend :
• un carter (2) en forme de capot, au moins partiellement ouvert vers le bas,
• au moins une lame de coupe (3) pouvant être entraînée en rotation dans ou au-dessous du carter (2) autour d'un axe de lame de coupe (3') dressé, dans laquelle
• un racleur (4) disposé à l'intérieur d'une paroi circonférentielle (2b) du carter (2) et un côté intérieur de la paroi circonférentielle (2b) mobile en direction circonférentielle (U) par rapport au racleur (4), et
• une lame de dégagement (5) pouvant être entraînée en rotation dans le carter (2) autour d'un axe de lame de dégagement (5'), laquelle lame de dégagement chevauche le racleur (4), tourne en direction radiale (11) à l'intérieur du racleur (4) et passe ce faisant à proximité de sa branche de raclage (4a),
**caractérisée en ce que**
• le racleur (4), vu de dessus, présente dans la direction circonférentielle (U) deux branches de raclage (4a) ou une branche de raclage avec deux sections de branche, qui font saillie vers le bas dans le carter (2) et s'étendent jusqu'à proximité d'une distance (7) de la surface intérieure de la paroi circonférentielle (2b1) du carter (2) et sont inclinées par rapport à la direction radiale (11) avec une distance plus petite par rapport à l'axe de rotation (5') de la lame de dégagement (5) à l'extrémité dirigée respectivement dans la direction circonférentielle (U) vers l'autre racleur (4) ou section de branche.

2. Tête de faucheuse à disques selon la revendication 1, **caractérisée en ce qu'**
• au moins une partie de la paroi circonférentielle (2b) du carter (2) fait partie d'une partie rotative de carter (2b) et est rotative par rapport à une partie supérieure de carter (2a) non rotative,
et
• le racleur (4) est disposé sur un côté inférieur de la partie supérieure de carter (2a) non rotative à l'intérieur de la paroi circonférentielle.

3. Tête de faucheuse à disques selon l'une des revendications précédentes,
**caractérisée en ce que**
• la lame de dégagement (5) chevauche en hauteur le racleur (4), en particulier sa branche de raclage (4a).

4. Tête de faucheuse à disques selon la revendication 2 ou l'une des revendications précédentes lorsqu'elle dépend de la revendication 2, **caractérisée en ce que**
• la lame de dégagement (5) présente une branche de dégagement (5a) dirigée vers le haut, en particulier par une extrémité libre,
• laquelle s'étend jusqu'à proximité du côté inférieur de la partie supérieure de carter (2a).

5. Tête de faucheuse à disques selon l'une des revendications précédentes,
**caractérisée en ce que**
• le côté intérieur de la paroi circonférentielle (2b) est rotatif autour d'un axe de rotation (2b') de la paroi circonférentielle (2b).

6. Tête de faucheuse à disques selon l'une des revendications précédentes,
**caractérisée en ce que**
• au moins respectivement deux axes de rotation parmi l'axe de lame de coupe (3') et/ou l'axe de lame de dégagement (5') et/ou l'axe de rotation (2a') de la paroi circonférentielle (2a) sont espacés l'un de l'autre d'au plus 5 cm, de préférence d'au plus 3 cm, de préférence d'au plus 2 cm,
• en particulier au moins respectivement deux, de préférence tous les trois de ces axes de rotation sont identiques.

7. Tête de faucheuse à disques selon l'une des revendications précédentes,
**caractérisée en ce que**
• l'au moins une lame de coupe (3) est fixée, en particulier de manière articulée, autour d'un axe d'articulation de lame de coupe (3*) dressé sur un disque de fauche (6) entraîné en rotation autour de l'axe de rotation de lame de coupe (3') et/ou
• l'au moins une lame de dégagement (5) est fixée, en particulier de manière fixe en rotation, sur un disque de fauche (6) entraîné en rotation autour de l'axe de rotation de lame de coupe (3') et/ou sur un arbre porte-lames (1) tournant autour d'un axe de rotation (1'),
• en particulier la lame de coupe (3) et la lame de dégagement (5) sont fixées sur le même disque de fauche (6) ou arbre porte-lames (1).

8. Tête de faucheuse à disques selon l'une des revendications précédentes,
**caractérisée en ce qu'**
• une distance radiale minimale (7) de la branche de raclage (4a) par rapport au côté intérieur de la paroi circonférentielle
• est d'au plus 10 %, de préférence d'au plus 5 %, de préférence d'au plus 3 % d'un rayon du côté intérieur de la paroi circonférentielle (2b1) et/ou
• est d'au plus 1,0 cm, de préférence d'au plus 0,5 cm, de préférence d'au plus 0,3cm.

9. Tête de faucheuse à disques selon la revendication 2 ou l'une des revendications précédentes lorsqu'elle dépend de la revendication 2, **caractérisée en ce qu'**
• une distance radiale minimale (8) d'une lame de dégagement (5), disposée de préférence dans la zone radiale d'un anneau rotatif (2b2) de la partie rotative de carter (2b) situé de manière sensiblement horizontale en fonctionnement, par rapport à la branche de raclage (4a)
• est d'au plus 10 %, de préférence d'au plus 5 %, de préférence d'au plus 3 % d'un rayon d'un cercle de trajectoire de la lame de dégagement (5) et/ou
• est d'au plus 1,0 cm, de préférence d'au plus 0,5 cm, de préférence d'au plus 0,3cm.

10. Tête de faucheuse à disques selon la revendication 2 ou l'une des revendications précédentes lorsqu'elle dépend de la revendication 2, **caractérisée en ce qu'**
• une distance axiale minimale (9) de la lame de dégagement (5) par rapport à un côté inférieur de l'anneau rotatif (2b2) de la partie rotative de carter (2b) situé de manière sensiblement horizontale en fonctionnement
• est d'au plus 15 %, de préférence d'au plus 10 %, de préférence d'au plus 5 % d'une hauteur libre intérieure du carter
et/ou
• est d'au plus 1,5 cm, de préférence d'au plus 1,0 cm, de préférence d'au plus 0,5cm.

11. Tête de faucheuse à disques selon l'une des revendications précédentes,
**caractérisée en ce que**
• la paroi circonférentielle (2b1) est réalisée de manière élastique au moins dans sa zone d'extrémité inférieure,
• en particulier avec une rigidité en flexion inférieure à 3 N/mm², en particulier inférieure à 2 N/mm², en particulier inférieure à 1 N/mm².

12. Procédé de fauche de végétation avec une tête de faucheuse à disques (50) selon l'une des revendications précédentes, **caractérisé en ce que**
• du produit de fauche compacté (kM) adhérant aux surfaces intérieures du carter (2), en particulier de sa paroi circonférentielle (2b1), en est détaché automatiquement et en continu, en particulier en est détaché mécaniquement,
• le produit de fauche compacté détaché (kM) est broyé automatiquement et en continu dans le carter (2).

13. Procédé selon la revendication 12, **caractérisé en ce que**
• le détachement du produit de fauche compacté (kM) de la paroi circonférentielle (2b1) s'effectue à l'aide d'un mouvement de rotation relatif du côté intérieur de la paroi circonférentielle (2b1) par rapport au reste du carter (2) au moyen du racleur (4) s'y trouvant
et/ou
• le produit de fauche compacté détaché (kM) est broyé dans le carter (2) en utilisant un entraînement de la lame de coupe (3).

14. Procédé selon la revendication 13, **caractérisé en ce que**
• le mouvement relatif est provoqué par le roulement de la paroi circonférentielle (2b1) sur un obstacle, tandis que la partie supérieure de carter (2a) n'effectue pas ce mouvement de roulement, mais reste immobile dans le sens de rotation et/ou
• le mouvement relatif est provoqué par l'entraînement de la lame de coupe (3),
• la paroi circonférentielle (2b1) étant en particulier entraînée à partir de l'entraînement de lame de coupe à une vitesse de rotation fortement démultipliée, de préférence d'au moins un facteur 10, de préférence d'un facteur 20, par rapport à une vitesse de rotation de la lame de coupe (3) en mode de fauche.
